(19) Europäisches Patentamt
European Patent Office
Office européen des brevets

(11) Veröffentlichungsnummer: **0 065 213**
**B1**

# (12) EUROPÄISCHE PATENTSCHRIFT

(45) Veröffentlichungstag der Patentschrift: **21.11.84**

(51) Int. Cl.³: **C 07 F 9/42**

(21) Anmeldenummer: **82103872.6**

(22) Anmeldetag: **05.05.82**

## (54) Verfahren zur Herstellung von Phosphonsäure-ester-chloriden.

(30) Priorität: **20.05.81 DE 3120069**

(43) Veröffentlichungstag der Anmeldung: **24.11.82 Patentblatt 82/47**

(45) Bekanntmachung des Hinweises auf die Patenterteilung: **21.11.84 Patentblatt 84/47**

(84) Benannte Vertragsstaaten: **BE CH DE FR GB IT LI NL SE**

(56) Entgegenhaltungen:
**EP - A - 0 049 342**

**ANGEWANDTE CHEMIE, Band 20, Nr. 3, März 1981, Seiten 223-232, Verlag Chemie GmbH, Weinheim, DE.**

(73) Patentinhaber: **HOECHST AKTIENGESELLSCHAFT, Postfach 80 03 20, D-6230 Frankfurt am Main 80 (DE)**

(72) Erfinder: **Grosse, Jürgen, Dr., Am grünen Weg 5, D-5030 Hürth (DE)**
Erfinder: **Pieper, Werner, Dr., Am Wachberg 27a, D-5042 Erftstadt (DE)**

EP 0 065 213 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein Verfahren zur Herstellung von Phosphonsäureesterchloriden durch Oxidation von Alkyl- oder Aryldichlorphosphanen.

Die Herstellung von Phosphonsäureesterchloriden wird bereits in »Methoden der organischen Chemie« (Houben—Weyl) Band XII/1, 4. Auflage (1963), Seiten 415—420 eingehend beschrieben, wobei verschiedene Verfahrenswege aufgezeigt sind.

Verfahrensweg 1 sieht die Umsetzung von Phosphonsäure-dialkylester mit $PCl_5$ gemäß folgender Reaktionsgleichung vor:

$$R-P(O)(OR')_2 + PCl_5 \rightarrow R-P(O)(OR')Cl + POCl_3 + RCl$$

Dabei entstehen als Nebenprodukt teilweise beträchtliche Mengen an Phosphonsäuredichloriden, die destillativ nur schwierig abtrennbar sind. Anstelle von $PCl_5$ ist auch Thionylchlorid verwendbar, jedoch weniger geeignet.

Nach Verfahrensweg 2 gehen Phosphonsäure-dihalogenide in Phosphonsäure-ester-halogenide über, wenn man sie mit äquimolaren Mengen eines Alkohols oder Phenols in Gegenwart eines tertiären Amins, wie Pyridin oder Trimethylamin umsetzt. Die hierbei anfallenden Ammoniumsalze vorgenannter Amine stellen ein nicht verwendbares Nebenprodukt dar und belasten somit die Wirtschaftlichkeit dieses Verfahrens.

Als Verfahrensweg 3 bietet sich eine Reaktion an, die sich durch folgende Reaktionsgleichung erfassen läßt:

$$[R-PCl_3^{\oplus}]AlCl_4^{\ominus} + 2\,R'OH \longrightarrow R-P(O)(OR')Cl + R'Cl + R'Cl + 2\,HCl + AlCl_3$$

Für die Durchführung im technischen Maßstab ist dieses Verfahren nicht geeignet, zumal das erwünschte Verfahrensprodukt in Abhängigkeit von der Art des verwendeten Alkohols lediglich in einer Ausbeute von etwa 32% erhalten wird.

In speziellen Fällen ist es möglich, existenzfähige Phosphonsäure-monohalogenide mit Schwefelsäure-di-alkylester zu Phosphonsäure-alkylester-halogeniden umzusetzen. Diesem Verfahrensweg 4 kommt ebenfalls keine praktische Bedeutung zu.

Aus Gründen der Wirtschaftlichkeit sind auch die weiteren Verfahrenswege 5 und 6 bedeutungslos. Nach Verfahrensweg 5 werden Phosphonigsäure-monoester durch Chlor oder Sulfurylchlorid in Phosphonsäure-ester-chloride in einer Ausbeute von 36% übergeführt. Ebenso gelangt man nach Verfahrensweg 6, bestehend in der oxidativen Chlorphosphonierung aliphatischer Kohlenwasserstoffe, zu Phosphonsäure-ester-chloriden, jedoch in geringer Ausbeute. Außerdem entstehen bei dieser Reaktion äquimolare Mengen an Phosphorsäure-ester-dichloriden als Nebenprodukt.

Die im vorhergehenden aufgezeigten Nachteile der bekannten Verfahren werden durch vorliegende Erfindung überwunden.

Gegenstand der Erfindung ist ein Verfahren zur Herstellung von Phosphonsäure-ester-chloriden der allgemeinen Formel (I)

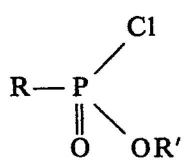

(I)

in welcher R einen Alkylrest mit 1—6 C-Atomen oder einen Arylrest bedeutet und R' für einen Alkylrest mit 1—20 C-Atomen oder einen Arylrest steht, welches dadurch gekennzeichnet ist, daß man eine Verbindung der allgemeinen Formel (II)

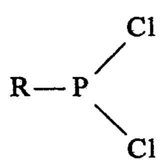

(II)

mit einem Schwefelsäuremonoester der allgemeinen Formel (III)

$$R'-O-SO_3H \qquad (III)$$

wobei in den Formeln (II) und (III) R bzw. R' obige Bedeutung besitzen, bei einer Temperatur von —20 bis 50° C, gegebenenfalls in Gegenwart eines inerten Lösungsmittels, umsetzt und nach Beendigung der Reaktion das Phosphonsäure-ester-chlorid aus dem Reaktionsgemisch abtrennt.

In der allgemeinen Formel (II) ist R vorzugsweise ein Methyl-, Ethyl- oder Phenylrest, während der Substituent R' in der allgemeinen Formel (III) vorzugsweise einen Methyl-, Ethyl-, Isobutyl-, Hexadecyl- oder Phenylrest bedeutet.

Die zur Umsetzung gelangenden Reaktanden werden vorteilhafterweise in einem Molverhältnis von Reaktand (II) zu Reaktand (III) wie 1—1,2 zu 1 eingesetzt, wobei im Falle der Verwendung eines Lösungs- oder Verdünnungsmittels für die Reaktanden sich Diethyläther oder Dichloräthan bewährt haben. Da die erfindungsgemäße Reaktion exotherm verläuft, kann es zweckmäßig sein das Reaktionsgemisch zu kühlen, so daß stets eine Reaktionstemperatur von Null bis 10° C eingehalten wird.

Zur Durchführung des Verfahrens der Erfindung tropft man mit Vorzug einer Lösung der Verbindung (III) in dem inerten Lösungsmittel die Verbindung (II) zu. Es kann jedoch auch umgekehrt verfahren werden. Die Verbindung (III) kann nach bekanntem Verfahren, wie z. B. in Houben—Weyl, Methoden der organischen Chemie, Band 12/1 (1963) beschrieben, hergestellt werden. Eine weitere Variante des erfindungsgemäßen Verfahrens besteht darin, zuerst die Verbindung (III) in Gegenwart des inerten Lösungsmittels, beispielsweise durch Umsetzung von Chlorsulfonsäure mit dem dem Substituenten R' entsprechenden Alkohol herzustellen und anschließend in dieses Reaktionsgemisch die Verbindung (II) einzutropfen. Anstelle von Chlorsulfonsäure kann auch ein $SO_3$/Dioxan-Addukt verwendet werden.

Das Verfahren der Erfindung stellt im Gegensatz zu den bekannten Verfahren grundsätzlich ein einstufiges Verfahren dar, bei welchem in einem Reaktionsschritt der Phosphor in der Verbindung (II) von der Oxidationsstufe 3 in die Oxidationsstufe 5 aufoxidiert und gleichzeitig ein Halogenatom durch eine Estergruppe ersetzt wird. Ein weiterer Vorteil besteht bei vorbeschriebener Verfahrensweise darin, daß die exotherme Reaktion bereits unter milden Reaktionsbedingungen abläuft und die dabei außer dem erwünschten Reaktionsprodukt anfallenden weiteren Verfahrensprodukte gasförmig sind und sich deshalb ohne Schwierigkeiten abtrennen lassen.

Die erfindungsgemäß erhaltenen Phosphonsäure-ester-chloride stellen wertvolle Zwischenprodukte für die Herstellung von Pflanzenschutzmittel, Flammschutzmitteln und Kunststoffadditiven dar.

Das Verfahren der Erfindung wird durch die folgenden Beispiele näher erläutert:

## Beispiel 1

In einem 1-l-Mehrhalskolben, ausgestattet mit Rührer, Innenthermometer, Rückflußkühler und Tropftrichter, wurden unter Stickstoff-Atmosphäre zu 150 $cm^3$ Diethylether nacheinander 118 g (1,01 mol) Chlorsulfonsäure innerhalb von 45 min, 75,1 g (1,01 mol) Isobutanol innerhalb von 1 h und 121,7 g (1,04 mol) Dichlormethylphosphan innerhalb von 2 h eingetropft. Die Reaktionstemperatur wurde durch Eiswasserkühlung während der gesamten Reaktion zwischen 0 und 5° C gehalten. Während der Reaktion entstandenes Hydrogenchlorid und Schwefeldioxid wurden in einer nachgeschalteten Wasser- bzw. Natronlaugewäsche aus dem Inertgasstrom ausgewaschen. Bei Raumtemperatur wurden aus dem Reaktionsgemisch Diethylether sowie gelöstes Hydrogenchlorid und Schwefeldioxyd unter Vakuum abgetrennt. Es wurden 169 g Rohprodukt erhalten, wobei laut $^{31}P$-NMR-Spektrum 80% des eingesetzten Phosphors als Methanphosphonsäureisobutylesterchlorid, 7% als Methanphosphonsäuredichlorid und 8% als Methanphosphonsäurediisobutylester vorliegen.

Das Rohprodukt wurde unter teilweiser Zersetzung durch Eintropfen in eine auf 70° C erwärmte Vigreux-Kolonne destillativ gereinigt. Es ging mit einer Siedetemperatur von 46—50° C/0,5—0,4 Torr als farblose Flüssigkeit in die Vorlage über.

Es wurden 112 g Destillat erhalten mit einer Zusammensetzung von 94% Methanphosphonsäureisobutylesterchlorid und 6% Methanphosphonsäuredichlorid.

Die Ausbeute nach der Destillation betrug 106,9 g (0,63 mol) Methanphosphonsäureisobutylesterchlorid oder 60,3% der Theorie.

## Beispiel 2

Analog Beispiel 1 wurden zu 150 $cm^3$ Diethylether innerhalb von 45 min 139,4 g (1,2 mol) Chlorsulfonsäure, innerhalb von 40 min 89,0 g (1,2 mol) Isobutanol und innerhalb von 4 h 158 g (1,206 mol) Dichlorethylphosphan hinzugefügt. Nach Abtrennung von Diethylether, Hydrogenchlorid und Schwefeldioxid wurden 225 g Rohprodukt erhalten. 82% des eingesetzten Phosphors lagen im Rohprodukt als Ethanphosphonsäureisobutylesterchlorid vor, das in einer beheizten Vigreux-Kolonne destilliert wurde. Der Siedepunkt des Esterchlorids betrug 56—58° C bei 0,1 Torr. Es wurden 146,3 g Destillat mit einer Zusammensetzung von 93% Ethanphosphonsäureisobutylesterchlorid und 7% Ethanphosphonsäuredichlorid erhalten.

Die Ausbeute nach der Destillation betrug 138 g (0,75 mol) Ethanphosphonsäureisobutylesterchlorid oder 62% der Theorie.

## Beispiel 3

Analog Beispiel 1 wurden 123,6 g (1,06 mol) Chlorsulfonsäure, 99,8 g (1,06 mol) Phenol und 128,7 g (1,1 mol) Dichlormethylphosphan in Gegenwart von 150 $cm^3$ Diethylether unter Eiswasserkühlung umgesetzt. Nach Abtrennung von Lösungsmittel, Hydrogenchlorid und Schwefeldioxid wurden 217 g Rohprodukt erhalten. Vom eingesetzten Phosphor lagen 44% als Methanphosphonsäurephenylesterchlorid, 14,3% als Methanphosphonsäurediphenylester und 3,6% als Methanphosphonsäuredichlorid vor. Die Destillation des Rohproduktes lieferte 71,5 g Destillat mit einem Siedepunkt von 94°C bei 0,02 Torr und einer Zusammensetzung laut $^{31}P$-NMR-Spektrum von 89% Methanphosphonsäurephenylesterchlorid, 1,7% Methanphosphonsäurediphenylester und 2% Methanphosphonsäuredichlorid.

Ausbeute nach der Destillation: 68,7 g (0,36 mol) Methanphosphonsäurephenylesterchlorid oder 32,8% der Theorie.

## Beispiel 4

Analog Beispiel 1 wurden in 200 $cm^3$ Diethylether unter Eiswasserkühlung innerhalb von 45 min 24 g (0,21 mol) Chlorsulfonsäure eingetropft. Mit Hilfe eines Dosierkolbens mit Förderschnecke wurden 49,8 g (0,21 mol) 1-Hexadecanol, $C_{16}H_{33}OH$, innerhalb von 45 min eingetragen und anschließend 25,9 g (0,22 mol) Dichlormethylphosphan innerhalb von 30 min in die klare, farblose Lösung getropft. Es bildete sich als Reaktionsprodukt ein weißer Feststoff, von dem nach Abzug der flüssigen und gelösten, gasförmigen Bestandteile 69 g isoliert wurden. Laut $^{31}P$-NMR-Spektrum entfielen 83% des eingesetzten Phosphors auf Methanphosphonsäurehexadecylesterchlorid und 15% auf Methanphosphonsäuredihexadecylester.

## Beispiel 5

In einer Apparatur analog Beispiel 1 wurden 91,7 g (0,79 mol) Chlorsulfonsäure vorgelegt und bei 0 bis 5°C unter Eiswasserkühlung innerhalb von 75 min 36,4 g (0,79 mol) Ethanol und anschließend innerhalb von 2 h 106,6 g (0,81 mol) Dichlorethylphosphan zugetropft. Um gelöstes Hydrogenchlorid und Schwefeldioxid zu entfernen, wurde das Reaktionsgemisch 1 h bei Raumtemperatur unter Wasserstrahlvakuum gestrippt. Es wurden 122 g Rohprodukt erhalten, wobei 34,2% des eingesetzten Phosphors als Ethanphosphonsäureethylesterchlorid vorlagen. Die nachfolgende Destillation ergab eine farblose Flüssigkeit vom Kp. 30—32°C/0,05—0,07 Torr, und einer Phosphorverteilung von 63,3% Ethanphosphonsäureethylesterchlorid sowie 23,2% Ethanphosphonsäuredichlorid neben weiteren nicht identifizierten Bestandteilen.

## Beispiel 6

Es wurde aus 609 g eines Schwefeltrioxid-Dioxan-Adduktes mit einem Gehalt von 143,9 g (1,8 mol) Schwefeltrioxid, gelöst in 400 g Dichlorethan, sowie 137,1 g (1,85 mol) Isobutanol eine Lösung von Schwefelsäuremonoisobutylester in Dichlorethan hergestellt. 66 g der so erhaltenen Lösung, enthaltend 49 g (0,32 mol) Schwefelsäuremonoisobutylester, wurden zu 59,5 g (0,33 mol) Dichlorphenylphosphan innerhalb einer Stunde zugetropft. Dabei wurde zu Beginn kurzzeitig auf 30°C erwärmt, dann aber durch Wasserkühlung die Reaktionstemperatur auf 20°C gehalten. Anschließend wurde das Reaktionsgemisch 4 h bei Raumtemperatur gerührt, dann bei einem Vakuum von 1 Torr und einer Temperatur bis 30°C gestrippt, wonach 79 g eines braunen, mittelviskosen Rohproduktes erhalten wurden. Laut $^{31}P$-NMR-Spektrum lagen im Rohprodukt 41% des eingesetzten Phosphors als Benzolphosphonsäureisobutylesterchlorid vor.

## Beispiel 7

Es wurden analog Beispiel 6 59,5 g (0,33 mol) Dichlorphenylphosphan mit 36 g (0,32 mol) Schwefelsäuremonomethylester innerhalb von 85 min umgesetzt, wobei das Phosphan vorgelegt wurde. Nach dem Strippen des Reaktionsgemisches bis 30°C unter einem Vakuum bis zu 1 Torr wurde eine braune, mittelviskose Flüssigkeit erhalten in der 29% des eingesetzten Phosphors als Benzolphosphonsäuremonomethylesterchlorid vorlagen.

**Patentansprüche**

1. Verfahren zur Herstellung von Phosphonsäure-ester-chloriden der allgemeinen Formel (I)

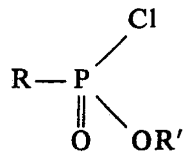
(I)

in welcher R einen Alkylrest mit 1—6 C-Atomen oder einen Arylrest bedeutet und R′ für einen Alkylrest mit 1—20 C-Atomen oder einen Arylrest steht, dadurch gekennzeichnet, daß man eine Verbindung der allgemeinen Formel (II)

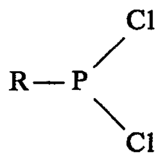
(II)

mit einem Schwefelsäuremonoester der allgemeinen Formel (III)

$R'-O-SO_3H$ (III)

wobei in den Formeln (II) und (III) R bzw. R′ obige Bedeutung besitzen, bei einer Temperatur von —20 bis 50° C, gegebenenfalls in Gegenwart eines inerten Lösungsmittels, umsetzt und nach Beendigung der Reaktion das Phosphonsäure-ester-chlorid aus dem Reaktionsgemisch abtrennt.

2. Verfahren nach Anspruch 1, dadurch gekennzeichnet, daß R ein Methyl-, Ethyl- oder Phenylrest und R′ ein Methyl-, Ethyl-, Isobutyl-, Hexadecyl- oder Phenylrest ist.

3. Verfahren nach Anspruch 1 oder 2, dadurch gekennzeichnet, daß das Molverhältnis des Reaktanden (II) zu dem Reaktanden (III) 1—1,2 zu 1 beträgt.

4. Verfahren nach Anspruch 1—3, dadurch gekennzeichnet, daß die Reaktionstemperatur Null bis 10° C beträgt.

5. Verfahren nach Anspruch 1—4, dadurch gekennzeichnet, daß man als inertes Lösungsmittel Diethyläther oder Dichloräthan verwendet.

6. Verfahren nach Anspruch 1—5, dadurch gekennzeichnet, daß man in eine Lösung der Verbindung (III) in dem inerten Lösungsmittel die Verbindung (II), gegebenenfalls unter Kühlung, zutropft.

**Claims**

1. Process for making phosphonic acid ester chlorides of the general formula (I)

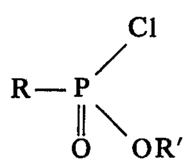
(I)

in which R stands for an alkyl radical with 1 to 6 carbon atoms or an aryl radical and R′ stands for an alkyl radical with 1 to 20 carbon atoms or an aryl radical which comprises: reacting a compound of general formula (II)

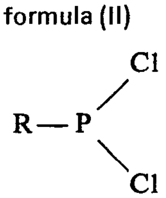
(II)

with a sulfuric acid monoester of general formula (III)

$R'-O-SO_3H$ (III)

formulae (II) and (III) in which R and R′, respectively, have the meanings given above, at a temperature of from —20° C to 50° C, if desired in the presence of an inert solvent and, after the end of the reaction,

separating the phosphonic acid ester chloride from the reaction mixture.

2. Process as claimed in claim 1, wherein R is a methyl, ethyl or phenyl radical and R′ is a methyl, ethyl, isobutyl, hexadecyl or phenyl radical.

3. Process as claimed in claim 1 or 2, wherein the molar ratio of reactant (II) to reactant (III) is 1—1.2 : 1.

4. Process as claimed in claims 1 to 3, wherein the reaction temperature is 0 to 10° C.

5. Process as claimed in claims 1 to 4, wherein diethylether or dichloroethane is used as inert solvent.

6. Process as claimed in claims 1 to 5, wherein reactant (II) is added dropwise while cooling, if desired, to a solution of reactant (III) in the inert solvent.

## Revendications

1. Procédé de préparation de chlorures-esters d'acides phosphoniques de formule générale (I):

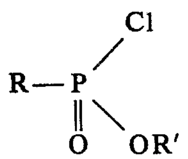

(I)

dans laquelle R représente un reste alkyle en $C_1-C_6$ ou un reste aryle et R′ représente un reste alkyle en $C_1-C_{20}$ ou un reste aryle, caractérisé en ce que l'on fait réagir un composé de formule générale (II):

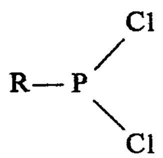

(II)

avec un monoester d'acide sulfurique de formule générale (III):

$$R'-O-SO_3H \qquad (III)$$

formules (II) et (III) dans lesquelles R et R′, respectivement, ont la signification ci-dessus, à une température de —20 à 50° C, éventuellement en présence d'un solvant inerte et, après la fin de la réaction, on sépare le chlorure-ester d'acide phosphonique du mélange de réaction.

2. Procédé selon la revendication 1, caractérisé en ce que R est un reste méthyle, éthyle ou phényle et R′ est un reste méthyle, éthyle, isobutyle, hexadécyle ou phényle.

3. Procédé selon la revendication 1 ou 2, caractérisé en ce que le rapport molaire du réactif (II) au réactif (III) est de 1—1,2 : 1.

4. Procédé selon les revendications 1 à 3, caractérisé en ce que la température de réaction est de 0 à 10° C.

5. Procédé selon les revendications 1 à 4, caractérisé en ce que l'on utilise comme solvant inerte l'éther diéthylique ou le dichloroéthane.

6. Procédé selon les revendications 1 à 5, caractérisé en ce que l'on ajoute goutte à goutte, éventuellement avec refroidissement, le composé (II) dans une solution du composé (III) dans le solvant inerte.